(19) Europäisches Patentamt / European Patent Office / Office européen des brevets

(11) **EP 1 217 380 B1**

(12) **FASCICULE DE BREVET EUROPEEN**

(45) Date de publication et mention
de la délivrance du brevet:
**04.04.2007 Bulletin 2007/14**

(51) Int Cl.:
*G01P 5/00* (2006.01)  *G01P 5/14* (2006.01)
*G01P 13/02* (2006.01)  *B64D 43/02* (2006.01)
*B64C 27/00* (2006.01)

(21) Numéro de dépôt: **01403199.1**

(22) Date de dépôt: **11.12.2001**

(54) **Anémometre pour hélicoptère**

Anemometer für Hubschrauber

Anemometer for helicopter

(84) Etats contractants désignés:
**DE FR GB IT**

(30) Priorité: **19.12.2000 FR 0016593**

(43) Date de publication de la demande:
**26.06.2002 Bulletin 2002/26**

(73) Titulaire: **Thales**
**92526 Neuilly sur Seine Cédex (FR)**

(72) Inventeur: **Goudon, Jean-Claude,**
**c/o Thales,**
**Intell. Property**
**94117 Arcueil,**
**Cedex (FR)**

(74) Mandataire: **Guérin, Michel**
**Marks & Clerk France**
**31-33 Avenue Aristide Briand**
**94117 Arcueil Cédex (FR)**

(56) Documents cités:
**EP-A- 0 319 447  EP-A- 0 763 743**
**US-A- 3 332 282**

• **PATENT ABSTRACTS OF JAPAN vol. 016, no. 568 (P-1458), 9 décembre 1992 (1992-12-09) -& JP 04 218778 A (SHIMADZU CORP), 10 août 1992 (1992-08-10)**

## Description

L'invention concerne la mesure de la vitesse d'un hélicoptère par rapport à l'air.

La mesure de la vitesse des aéronefs se fait en général à partir de centrales anémobarométriques qui permettent de calculer la vitesse de l'aéronef par rapport à l'air ambiant à partir de mesures de pression statique, de pression totale et de température : à pression statique et température statique constante, la pression totale mesurée croît et décroît comme la vitesse selon une loi connue.

Ces centrales sont bien adaptées aux avions sur lesquels on sait placer des sondes de mesure de pression et température, mais elles sont mal adaptées aux hélicoptères, à cause des basses vitesses, des fortes composantes de déplacement latéral, et des perturbations de mesure de pression dues aux flux d'air du rotor.

C'est pourquoi on a déjà proposé de placer des sondes de pression sur les pales du rotor et d'observer les variations de pression. Si l'hélicoptère ne se déplace pas par rapport à l'air ambiant, la vitesse de la sonde par rapport à l'air est constante (le vecteur vitesse tourne seulement avec le rotor) ; la pression mesurée par la sonde est constante et sa valeur est liée uniquement à la vitesse de rotation du rotor. Si l'hélicoptère se déplace à vitesse $V_{air}$ par rapport à l'air, l'amplitude de la vitesse instantanée de la sonde par rapport à l'air varie sinusoïdalement autour d'une valeur moyenne qui représente la vitesse de rotation des pales ; l'amplitude de la sinusoïde représente la vitesse d'avancement de l'hélicoptère par rapport à l'air ; et la phase représente la direction d'avancement par rapport à une direction de référence de l'hélicoptère : le maximum de la sinusoïde de vitesse se produit au moment où la sonde est tournée vers la direction d'avance de l'hélicoptère, tandis que le minimum se produit au moment où la sonde est tournée dans la direction opposée.

La pression totale mesurée par la sonde ne varie pas linéairement avec la vitesse. Mais elle suit une loi de variation connue, classique en anémobarométrie. Lorsque la vitesse varie sinusoïdalement, la pression suit alors une courbe de variation qu'on peut qualifier de sinusoïde déformée.

Si la variation de pression suivait une loi exactement sinusoïdale, identique à la variation sinusoïdale de la vitesse de la sonde, il serait facile de déterminer l'amplitude et la phase de cette sinusoïde et d'en déduire l'amplitude et la direction du vecteur vitesse de l'hélicoptère.

Mais ce n'est pas le cas du fait que la sinusoïde est déformée.

On a déjà proposé dans le passé d'effectuer une analyse par transformée de Fourier de la courbe de pression mesurée en bout de pale, pour en tirer des valeurs numériques qui permettent de remonter jusqu'à la valeur et à la direction du vecteur vitesse par rapport à l'air.

Mais ce procédé réclame des calculs lourds et donc des moyens électroniques sophistiqués pour obtenir en temps réel une indication précise du vecteur vitesse.

L'invention a pour but de proposer une solution particulièrement simple pour déterminer l'amplitude et la direction du vecteur vitesse d'un hélicoptère.

Selon l'invention, on propose un procédé de détermination de vitesse d'hélicoptère utilisant une sonde de pression montée sur une pale du rotor, ce procédé consistant à :

- obtenir N échantillons de mesure de pression Pi répartis sur l'ensemble d'une rotation complète de la pale,
- produire un premier signal binaire changeant d'état au passage de la pale par des orientations remarquables situées à 0° et 180° d'une orientation de référence de la pale, et un deuxième signal binaire en quadrature de phase avec le premier et changeant d'état à 90° et 270°, et effectuer les sommes suivantes S1 et S2 pendant une rotation complète :

  - S1 : somme des échantillons obtenus pendant un premier état du premier signal binaire diminuée de la somme des échantillons obtenus pendant le deuxième état du premier signal ;
  - S2 : somme des échantillons obtenus pendant un premier état du deuxième signal binaire diminuée de la somme des échantillons obtenus pendant le deuxième état du deuxième signal binaire,

- calculer une valeur numérique représentant arctg (S2/S1), le résultat de ce calcul déterminant une phase remarquable φ correspondant à une direction de la vitesse cherchée.

Pour déterminer ensuite l'amplitude de la vitesse, on prévoit de stocker les N échantillons de pression utilisés au cours de la détermination de la phase remarquable φ ainsi que les instants de mesure correspondants; on additionne une valeur π/2 et une valeur 3π/2 à la phase φ (modulo 2π), pour obtenir deux autres phases remarquables Φmax et Φmin représentant les instants de mesure théoriques du maximum et du minimum de la courbe de valeurs de pression mesurées au cours de la rotation, et on recherche dans les échantillons stockés les valeurs d'échantillons de pression Pmax et Pmin correspondant à ces instants. Enfin, on calcule la vitesse instantanée Vmax et Vmin à partir de ces valeurs de pression, et on détermine l'amplitude de la vitesse à partir de Vmax et Vmin : la vitesse $V_{air}$ est en principe la moitié de la différence Vmax-Vmin.

L'invention propose en outre un système de mesure de vitesse comportant les moyens nécessaires à la mise en oeuvre du procédé qui vient d'être décrit dans ses grandes lignes.

Le système de mesure de vitesse d'hélicoptère par rapport à l'air, comprend :

- une sonde de pression placée sur une pale du rotor de l'hélicoptère, cette sonde fournissant des signaux représentant la pression mesurée par la sonde,
- des moyens pour obtenir des échantillons de mesure de pression répartis au cours d'une rotation complète de la pale,
- des moyens pour produire un premier signal binaire changeant d'état au passage de la pale par des orientations remarquables situées à 0° et 180° d'une orientation de référence de la pale, et un deuxième signal binaire en quadrature de phase avec le premier et changeant d'état à 90° et 270°,
- un premier accumulateur numérique pour calculer la somme S1 des échantillons obtenus pendant un premier état du premier signal binaire diminuée de la somme des échantillons obtenus pendant le deuxième état du premier signal ;
- un deuxième accumulateur numérique pour calculer la somme S2 des échantillons obtenus pendant un premier état du deuxième signal binaire diminuée de la somme des échantillons obtenus pendant le deuxième état du deuxième signal binaire,
- des moyens pour calculer une valeur numérique représentant arctg(S2/S1), le résultat de ce calcul déterminant une phase remarquable ϕ correspondant à une direction de la vitesse cherchée.

Le système comprend de préférence également, pour la détermination de l'amplitude de la vitesse, les moyens suivants :

- des moyens pour stocker les échantillons de pression en relation avec les instants de mesure correspondants,
- des moyens pour additionner une valeur $\pi/2$ et une valeur $3\pi/2$ à la phase ϕ (modulo $2\pi$), pour obtenir deux autres phases remarquables Φmax et Φmin représentant les instants de mesure théorique du maximum et du minimum de la courbe de valeurs de pression au cours de la rotation,
- des moyens pour rechercher dans les échantillons stockés des valeurs d'échantillons de pression Pmax et Pmin correspondant à ces instants, des moyens de calcul de la vitesse instantanée Vmax et Vmin correspondant à ces valeurs de pression Pmax et Pmin, et des moyens pour déterminer l'amplitude $V_{air}$ de la vitesse de l'hélicoptère par rapport à l'air à partir de Vmax et Vmin.

La sonde de pression peut être une sonde fournissant des impulsions dont la périodicité est fonction de la pression, et il est alors prévu de préférence un circuit de détermination de la valeur de cette périodicité, ce circuit fournissant des valeurs d'échantillons de mesure de pression représentés par la valeur de la période déterminée. Ce circuit peut être un simple circuit de comptage d'impulsions à fréquence beaucoup plus élevée que celle des impulsions fournies par la sonde, ce circuit comptant le nombre d'impulsions de fréquence élevée émises pendant une ou plusieurs périodes d'impulsions issues de la sonde.

Les accumulateurs qui calculent les sommes S1 et S2 peuvent alors recevoir simplement pendant ce temps la fréquence de comptage de ce compteur, et compter ou décompter les impulsions reçues à fréquence élevée selon l'état des premier et deuxième signaux binaires. Les accumulateurs sont remis à zéro au bout d'une rotation complète de la pale, et c'est alors qu'est effectué le calcul d'arctg(S2/S1).

D'autres caractéristiques et avantages de l'invention apparaîtront à la lecture de la description détaillée qui suit et qui est faite en référence aux dessins annexés dans lesquels :

- la figure 1 représente une hélicoptère dont une des pales de sustentation porte une sonde de pression, la pale étant dans une position de référence par rapport à la structure de l'hélicoptère ;
- la figure 2 représente l'hélicoptère avec la pale dans une position quelconque au cours de sa rotation ;
- la figure 3 représente la sinusoïde de vitesse de la sonde ;
- la figure 4 représente la sinusoïde déformée de pression mesurée par la sonde ;
- la figure 5 représente le principe de corrélation permettant de déterminer la phase de la sinusoïde déformée ;
- la figure 6 représente un schéma bloc d'un circuit de mise en oeuvre préférentiel du procédé de mesure de vitesse selon l'invention.

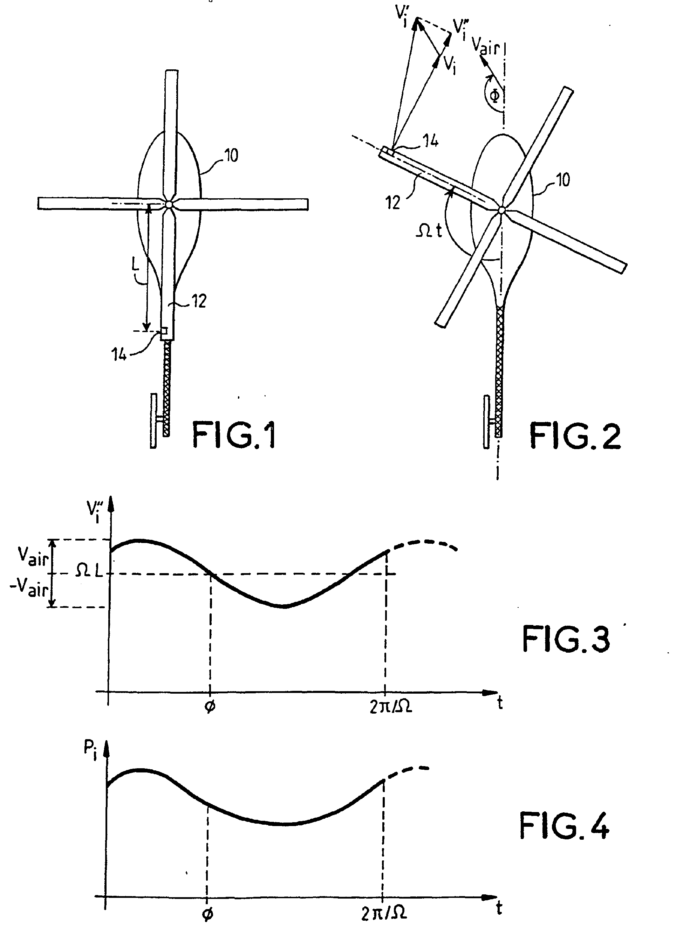

Sur la figure 1, on voit l'hélicoptère 10 avec quatre pales de sustentation entraînées par un rotor, parmi lesquelles une pale 12 porte une sonde de pression 14 ; cette pale sera considérée comme pale de référence. Les autres pales pourraient aussi porter des sondes de pression, et dans ce cas on pourrait combiner les informations issues des différentes sondes pour accroître la précision ou la fiabilité du système. De même, il pourrait y avoir plusieurs sondes sur une pale. Dans ce qui suit on considérera qu'il n'y a qu'une sonde de pression sur une seule pale puisque cela suffit dans le principe à la détermination de vitesse de l'hélicoptère.

La sonde peut être située en bout de pale ou dans une partie intermédiaire. En bout de pale, elle doit alors être plus résistante aux accélérations fortes, et notamment à la force centrifuge.

La sonde est tournée de préférence vers l'avant de la pale, dans le sens de rotation de la pale (perpendiculairement à la longueur de la pale par conséquent) pour mesurer la pression d'air maximale due à la vitesse de rotation de la pale plutôt que la dépression à l'arrière de la pale. Le sens de rotation est le sens des aiguilles d'une montre sur les figures. La sonde doit être également placée dans un plan correspondant à l'assiette de référence de l'hélicoptère, de manière que la vitesse d'hélicoptère calculée soit référencée par rapport à cette assiette.

A la figure 1, la pale 12 est représentée dans une position de référence utilisée dans le calcul de vitesse. Par souci de simplicité, on prend ici comme référence la position de la pale 12 dans l'axe longitudinal de la structure de l'hélicoptère et vers l'arrière, la vitesse de l'hélicoptère par rapport à l'air étant définie par rapport à cet axe longitudinal.

A la figure 2, on a représenté la pale 12 en rotation à vitesse $\Omega$ supposée constante, la pale étant dans une position quelconque définie à un instant t par l'angle $\Omega t$ de la pale par rapport à sa position de référence (on suppose qu'à t=0, la pale est dans la position de référence).

Une flèche désignée par $V_{air}$ représente la vitesse de l'hélicoptère par rapport à l'air. Elle fait un angle $\phi$ avec l'axe longitudinal de référence de l'hélicoptère. La détermination de la vitesse comprend la détermination de l'angle $\phi$ et de l'amplitude $V_{air}$.

La vitesse linéaire instantanée de la sonde par rapport à l'hélicoptère est un vecteur Vi d'amplitude $L\Omega$, si L est la distance entre la sonde et l'axe du rotor, et de direction $\Omega t + \pi/2$. Mais la vitesse de la sonde par rapport à l'air, sachant que l'hélicoptère avance avec la vitesse $V_{air}$ dans la direction définie par l'angle $\phi$, est un vecteur V'i qui est la combinaison vectorielle de Vi et de $V_{air}$. Ce vecteur combiné V'i peut être décomposé en deux composantes, l'une dans la direction longitudinale de la pale, sans effet sur la sonde de pression, et l'autre, désignée par V"i dans la direction perpendiculaire à la pale, direction où la sonde est le plus sensible à la pression.

La pression vue à l'instant t par la sonde est celle qui résulte de la composante de vitesse instantanée V"i = $\Omega L$ - $V_{air}$ sin($\Omega t - \phi$).

Cette composante de vitesse varie donc selon une courbe sinusoïdale oscillant avec une amplitude de +$V_{air}$ à -$V_{air}$ autour d'une valeur moyenne $\Omega L$ et avec une phase (déterminée par rapport à la position de référence de la pale) qui est l'angle $\phi$ représentant la direction d'avancement de l'hélicoptère.

Cette courbe est représentée à la figure 3.

Si la mesure de pression par la sonde permettait de calculer directement cette courbe, la mesure de vitesse consisterait simplement à repérer l'amplitude de l'oscillation et sa phase pour connaître le vecteur vitesse $V_{air}$ en amplitude et direction.

Toutefois les sondes de pression ne fournissent pas une vitesse mais une pression, et la formule mathématique (connue et classique en anémobarométrie) qui permet de passer de la vitesse à la pression n'est pas une formule linéaire. C'est une fonction du type Pt = Ps $(1+0,2M^2)^{7/2}$ où Pt est la pression totale mesurée par la sonde, Ps est la pression statique atmosphérique (en dehors de tout mouvement), M est la vitesse de la sonde exprimée en nombre de Mach, c'est-à-dire en fraction de la vitesse du son dans l'air, la vitesse du son dépendant elle-même de la température de l'air.

De plus, la sonde elle-même a des caractéristiques qui ne sont pas forcément linéaires. Par exemple, une sonde de type capacitif, à membrane résonante, produisant un signal de sortie sous forme d'une valeur de fréquence de résonance, fournit des échantillons de mesure de pression qui ne varient pas linéairement en fonction de la pression. Typiquement, on peut utiliser une sonde fournissant une fréquence de sortie F = $F_0[(P+P_0)/2P_0]^{1/2}$, P étant la pression, $P_0$ une pression au repos et $F_0$ la fréquence correspondante. $P_0$ dépend en pratique de la température du capteur.

La pression mesurée par la sonde, varie dans ces conditions selon une sinusoïde déformée représentée à la figure 4, dont les maxima et minima se situent aux mêmes endroits que ceux de la sinusoïde de vitesse, mais dont la phase $\phi$ est difficile à déterminer à partir de la simple observation de la courbe, et dont la valeur moyenne ne correspond d'ailleurs pas à la valeur de vitesse moyenne $\Omega L$ de la sonde. La fréquence fournie par la sonde varie de la même manière, avec une autre déformation de sinusoïde, mais avec ces mêmes particularités du fait de la monotonie de la fonction fréquence /pression.

Dans ce qui suit on fera le raisonnement mathématique en parlant d'échantillons de pression, que ces échantillons de pression soient véritablement une pression ou une fréquence représentant cette pression, ou encore la période de cette fréquence, ou tout autre signal électrique représentant la pression, pourvu que ce signal varie de manière monotone avec la pression. Le raisonnement est en effet le même dans tous les cas, en effectuant cependant les transpositions nécessaires si le signal varie en sens inverse de la pression : par exemple si les échantillons de pression sont établis sous forme d'un comptage de la période de signal et non pas de la fréquence de signal dans le cas de la sonde mentionnée ci-dessus, il est évident que les maxima de la période coïncident avec les minima de pression (et de vitesse) de la sonde, et vice-versa.

On pourrait bien sûr calculer point par point toutes les valeurs de vitesse V"i correspondant à toutes les pressions Pi mesurées, à partir du calcul inverse de celui qui a été indiqué ci-dessus, puis, ayant retrouvé une forme sinusoïdale, déterminer assez facilement l'amplitude et la direction de la vitesse $V_{air}$. Mais cela demanderait des moyens de calcul très puissants.

Un traitement par transformée de Fourier sur les échantillons de pression obtenus au cours d'une rotation complète permet également de remonter à la phase et à la vitesse $V_{air}$ mais demande également des moyens de calcul puissants.

La présente invention propose un moyen beaucoup plus simple qui repose sur le fait que bien que la sinusoïde soit déformée, elle est fortement corrélée avec la forme de la sinusoïde de vitesse qui a même période et même phase, les maxima et minima de la sinusoïde déformée coïncidant avec ceux de la sinusoïde de vitesse (ou éventuellement intervertis); on devrait donc pouvoir, par une corrélation simple, retrouver la phase de la sinusoïde de vitesse correspondant à la sinusoïde de pression ou à la sinusoïde des échantillons de signal quel qu'il soit.

La sonde fournit donc à chaque tour de rotor N échantillons périodiques de mesure de pression dont les valeurs sont stockées en mémoire et associées chacune à la valeur de l'instant de mesure (ce stockage est utile à la mesure d'amplitude mais non à la mesure de la phase) ; cet instant est exprimé par exemple sous forme d'un angle de phase $2k\pi/N$ où k représente le numéro de l'échantillon de 1 à N. Par exemple, c'est simplement le numéro d'échantillon k qui sert d'adresse dans une mémoire où on stocke la valeur de l'échantillon à cette adresse.

On fait la corrélation de la manière la plus simple possible, consistant alors simplement à créer deux formes d'onde carrées, alternant chacune entre deux valeurs binaires (qu'on désignera par simplicité par +1 et -1). Ces deux formes d'onde carrée ont pour période la période de rotation du rotor, sont synchronisées sur cette rotation, et sont déphasées de 90° l'une par rapport à l'autre. La première forme d'onde a par exemple la valeur +1 pendant que l'angle de rotation $\Omega t$ est supérieur ou égal à 0° et inférieur à 180°, puis la valeur -1 tant que l'angle est supérieur ou égal à 180° et inférieur à 360°. La deuxième forme d'onde prend alors la valeur -1 de 0° à 90° et de 270° à 360° et la valeur +1 de 90° à 270°.

Les valeurs numériques des échantillons de mesure de pression sont multipliés par +1 ou par -1 selon la valeur binaire de la forme d'onde, et additionnés de manière à former les sommes algébriques suivantes :

Somme S1 : somme des échantillons obtenus pour un premier état de la première forme d'onde (+1 en principe), diminuée de la somme des échantillons obtenus pour le deuxième état de la première forme d'onde

Somme S2 : somme des échantillons obtenus pour un premier état de la deuxième forme d'onde (+1 en principe), diminuée de la somme des échantillons obtenus pour le deuxième état de la deuxième forme d'onde.

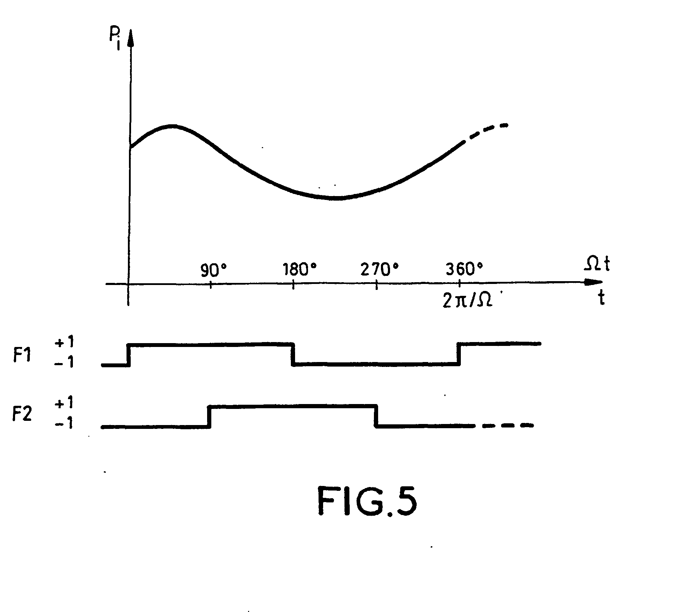

La figure 5 représente les formes d'onde carrées F1 et F2, calées en phase sur la rotation du rotor, en regard de la courbe de valeurs de pression transmises par la sonde.

La théorie et l'expérimentation montrent qu'on peut tirer l'angle $\phi$ de la connaissance du rapport S2/S1 et plus précisément de la valeur arctg(S2/S1).

L'angle $\phi$ est égal à arctg(S2/S1) si les créneaux F1 et F2 sont référencés comme indiqués ci-dessus, mais pourrait être égal à -arctg(S2/S1) avec une forme d'onde F2 déphasée de -90° plutôt que de +90° par rapport à F1.

Etant donné que la fonction arctg admet deux solutions séparées de 180° pour l'angle $\phi$, on lève l'ambiguïté sur la valeur de l'angle par la connaissance du signe de la somme S1 ou S2 par exemple (positif si l'angle est inférieur à 180°).

Par conséquent, on considère que la valeur arctg(S2/S1) représente le déphasage qu'aurait la sinusoïde de vitesse correspondant à la courbe de pression mesurée par la sonde, ceci sans avoir besoin de recalculer les points de la sinusoïde de vitesse.

Les valeurs de phase indiquées ci-dessus pour les signaux binaires F1 et F2 concernent le cas où les échantillons de pression varient comme la vitesse de la sonde. S'ils varient en sens inverse, on les modifiera, par exemple en inversant la phase de F1 qui aurait alors la valeur -1 de 0 à 180°.

Connaissant maintenant cet angle de déphasage $\phi$, représentant la direction du vecteur vitesse de l'hélicoptère par rapport à l'air, on calcule les angles $\Phi max = \phi+\pi/2$ (modulo $2\pi$) et $\Phi min = \phi+3\pi/2$ (modulo $2\pi$) auxquels se situent le maximum et le minimum de la courbe de pression puisque ces maximum et minimum coïncident avec ceux de la sinusoïde de vitesse. Et on va chercher dans la table des valeurs d'échantillons les valeurs de pression qui correspondaient aux instants de mesure pour ces angles. En pratique, on exprime la phase calculée $\phi$ sous forme d'une numéro d'échantillon $k_0$ et on exprime les positions de $\Phi max$ et $\Phi min$ sous la forme $k_0+N/4$ et $k_0 + 3N/4$ modulo N. Ces nombres représentent l'adresse à laquelle on va chercher les échantillons représentant la pression maximale Pmax et la pression minimale Pmin.

Si ces échantillons sont stockés sous forme d'une valeur de fréquence d'impulsions ou sous forme d'une valeur de période, on effectue évidemment le calcul qui convient pour trouver la pression. Dans le cas de la sonde capacitive, la formule simplifiée de la fréquence en fonction de la pression a été indiquée. Toutefois, la valeur de pression de référence dépend de la température et un capteur de température de la sonde est en général associé à la sonde pour permettre le calcul de la pression.

Ayant les valeurs de pression maximale et minimale, on calcule alors les vitesses air correspondantes par la formule inverse de la formule $Pt=Ps(1+0,2M^2)^{7/2}$ pour aboutir à deux vitesses Vi''max et Vi''min.

La différence de ces vitesses est égale à deux fois la vitesse de l'hélicoptère par rapport à l'air.

$$V_{air} = (Vi''max - Vi''min)/2$$

Le calcul de vitesse fait intervenir classiquement la pression statique et la température de l'air, qui doivent être connues par ailleurs.

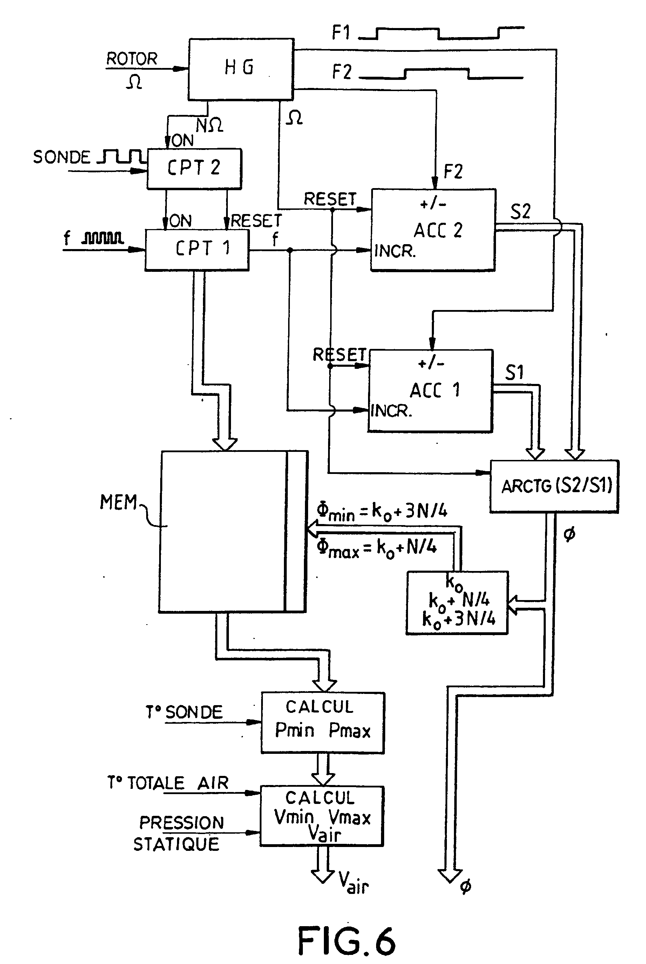

La mise en oeuvre de l'invention peut se faire à l'aide de la circuiterie représentée sur la figure 6.

On a illustré l'invention dans le cas d'une sonde de pression fournissant des impulsions dont la fréquence (donc la période) varie en fonction de la pression. On pourrait utiliser pour constituer des échantillons de mesure de pression, un simple comptage des impulsions pendant une durée déterminée, et se servir du comptage pour effectuer les sommes algébriques S1 et S2 définies précédemment. Cependant, pour plus de précision lorsque la fréquence des impulsions de la sonde n'est pas très élevée (quelques dizaines de kilohertz), on préfère utiliser comme valeur d'échantillons un comptage de la durée de la période des impulsions fournies par la sonde. Ce comptage est fait avec une fréquence de comptage fixe beaucoup plus grande que la fréquence des impulsions fournies par la sonde. On peut compter la période séparant deux impulsions successives, ou mieux la durée de plusieurs impulsions successives en provenance de la sonde.

Une horloge générale HG, synchronisée sur la rotation du rotor qui en général est régulière, définit les N instants de mesure, par exemple sous forme d'impulsions à fréquence $N\Omega$. Elle définit aussi les signaux binaires F1 et F2 servant à la corrélation.

A un instant de mesure donné, $t=k/N\Omega$ on détermine le début de la première impulsion de sonde qui arrive, et on déclenche le comptage d'un compteur CPT1 qui compte à partir de zéro à une fréquence f, fixe et très supérieure à celle des impulsions de la sonde (par exemple f = 20 MHz). On arrête le comptage à l'arrivée de l'impulsion suivante, ce qui donne un contenu de compteur représentant directement cette période, donc l'inverse de la fréquence, donc une valeur représentant la pression. Ou bien encore, on arrête le comptage au bout de plusieurs impulsions (toujours le même nombre bien sûr, défini par exemple par un compteur CPT2) ce qui donne un compte représentant un somme de plusieurs périodes, représentant également la pression.

La valeur du compteur en fin de comptage est stockée dans une mémoire MEM, à une adresse k correspondant à l'instant de mesure. Cette adresse est incrémentée à chaque nouvel échantillon par l'horloge générale HG qui définit les instants de mesure. Une valeur stockée peut par ailleurs être lue ultérieurement en appliquant une adresse de lecture correspondant à un instant de mesure déterminé. La mémoire est complètement remplie à chaque tour de rotor en remplaçant les anciennes valeurs. Des mémoires tampons pour le remplissage de la mémoire, ou un fonctionnement avec deux mémoires travaillant en alternance en lecture et écriture à chaque tour est bien entendu prévu si la durée nécessaire au calcul de vitesse exige de conserver le contenu de la mémoire d'un tour avant de la remplir pour le tour suivant.

Les créneaux binaires F1 et F2 contrôlent chacun un accumulateur respectif ACC1, ACC2. Les accumulateurs sont initialisés à zéro lors du passage rotor par sa position de référence. Ils additionnent les échantillons au fur et à mesure de leur arrivée, en positif ou en négatif selon l'état des signaux binaires F1, F2 qui les commandent. Ils calculent donc les sommes S1 et S2 qui sont disponibles dans les accumulateurs à la fin d'un tour pour être utilisées dans un circuit de calcul de arctg (S2/S1).

Les accumulateurs pourraient être des additionneurs/soustracteurs qui reçevraient les échantillons du compteur CPT1 au fur et à mesure qu'ils arrivent et les additionneraient ou les soustrairaient en fonction de l'état de F1 et F2. Mais, comme cela est représenté sur la figure 5, il est plus simple de prévoir que les accumulateurs ACC1 et ACC2 sont de simples compteurs/décompteurs qui reçoivent directement les impulsions de comptage du compteur CPT1 (en principe à fréquence f ou sous-multiple de f) tant que le compteur compte et qui les accumulent algébriquement en comptant ou décomptant ces impulsions selon l'état de F1 et F2.

A la fin d'un tour de rotor, les accumulateurs contiennent les sommes S1 et S2 et les transfèrent à un circuit de calcul de arctg(S2/S1) avant d'être remis à zéro pour un nouveau tour.

Le circuit de calcul de $\phi$ = arctg(S2/S1) fournit directement en sortie la direction du vecteur vitesse de l'hélicoptère. De plus, il fournit une information à un circuit de calcul de $\phi+90°$ et $\phi+270°$. Ce dernier fournit à la mémoire MEM, en lecture, les adresses $k_0$ +N/4 et $k_0+3N/4$ correspondant à ces phases. Les valeurs d'échantillons stockés sont extraits de la mémoire et transmis à un circuit de calcul de pression Pmin et Pmax à partir des valeurs d'échantillons stockées.

Le circuit de calcul de Pmin et Pmax utilise les données caractéristiques de la sonde de pression pour déduire à partir des nombres représentant les périodes d'impulsions issues de la sonde des valeurs numériques de pression. Ce circuit peut faire intervenir une mesure de température de la sonde, et dans ce cas une information de température de la sonde est fournie par celle-ci (cas des sondes de pression associées à une sonde de température locale).

Enfin, à partir des valeurs de pression Pmin et Pmax, un circuit de calcul de Vmin et Vmax détermine Vmin et Vmax en fonction des formule anémobarométriques indiquées ci-dessus. Ce calcul fait en principe intervenir une mesure de pression statique et une valeur de température de l'air (température statique ou température totale selon les définitions en usage dans l'anémobarométrie). Les valeurs de pression statique et de température, obtenues par ailleurs, sont donc transmises à ce circuit.

Le circuit de calcul de Vmin et Vmax fournit la valeur $V_{air}$ qui est la moitié de la différence entre Vmin et Vmax.

## Revendications

1. Procédé de détermination de vitesse d'hélicoptère utilisant une sonde de pression (14) montée sur une pale (12) du rotor, ce procédé consistant à :

- obtenir N échantillons de mesure de pression Pi répartis sur l'ensemble d'une rotation complète de la pale,

- produire un premier signal binaire (F1) changeant d'état au passage de la pale par des orientations remarquables situées à 0° et 180° d'une orientation de référence de la pale, et un deuxième signal binaire (F2) en quadrature de phase avec le premier et changeant d'état à 90° et 270°, et effectuer les sommes suivantes S1 et S2 pendant une rotation complète :

- S1 : somme des échantillons obtenus pendant un premier état du premier signal binaire diminuée de la somme des échantillons obtenus pendant le deuxième état du premier signal ;
- S2 : somme des échantillons obtenus pendant un premier état du deuxième signal binaire diminuée de la somme des échantillons obtenus pendant le deuxième état du deuxième signal binaire,

- calculer une valeur numérique représentant arctg(S2/S1), le résultat de ce calcul déterminant une phase remarquable φ correspondant à une direction de la vitesse cherchée.

2. Procédé selon la revendication 1, **caractérisé en ce que**, pour déterminer ensuite l'amplitude de la vitesse, on prévoit de stocker les N échantillons de pression utilisés au cours de la détermination de la phase remarquable φ ainsi que les instants de mesure correspondants; on additionne une valeur $\pi/2$ et une valeur $3\pi/2$ à la phase φ (modulo $2\pi$), pour obtenir deux autres phases remarquables Φmax et Φmin représentant les instants de mesure théoriques du maximum et du minimum de la courbe de valeurs de pression mesurées au cours de la rotation, on recherche dans les échantillons stockés les valeurs d'échantillons de pression Pmax et Pmin correspondant à ces instants, et enfin on calcule la vitesse instantanée Vmax et Vmin à partir de ces valeurs de pression, en fonction d'une relation vitesse/pression, et on détermine l'amplitude de la vitesse de l'hélicoptère à partir de Vmax et Vmin.

3. Procédé selon la revendication 2, **caractérisé en ce que** la relation vitesse/pression est la suivante :

$Pt = Ps(1+0,2M^2)^{7/2}$ où Pt est la pression totale mesurée par la sonde, Ps est la pression statique atmosphérique, M est la vitesse exprimée en nombre de Mach.

4. Système de mesure de vitesse d'hélicoptère comprenant une sonde de pression (14) placée sur une pale (12) du rotor de l'hélicoptère, cette sonde fournissant des signaux représentant la pression (Pi) mesurée par la sonde, et des moyens pour obtenir des échantillons de mesure de pression répartis au cours d'une rotation complète de la pale, **caractérisé en ce qu'**il comprend en outre :

- des moyens (HG) pour produire un premier signal binaire (S1) changeant d'état au passage de la pale par des orientations remarquables situées à 0° et 180° d'une orientation de référence de la pale, et un deuxième signal binaire (F2) en quadrature de phase avec le premier et changeant d'état à 90° et 270°,
- un premier accumulateur numérique (ACC1) contrôlé par le premier signal binaire pour calculer la somme S1 des échantillons obtenus pendant un premier état du premier signal binaire diminuée de la somme des échantillons obtenus pendant le deuxième état du premier signal ;
- un deuxième accumulateur numérique (ACC2) contrôlé par le deuxième signal binaire pour calculer la somme S2 des échantillons obtenus pendant un premier état du deuxième signal binaire diminuée de la somme des échantillons obtenus pendant le deuxième état du deuxième signal binaire,
- des moyens pour calculer une valeur numérique représentant arctg(S2/S1), le résultat de ce calcul déterminant une phase remarquable φ correspondant à une direction de la vitesse cherchée.

5. Système selon la revendication 4, **caractérisé en ce qu'**il comprend également, pour la détermination de l'amplitude de la vitesse :

- des moyens (MEM) pour stocker les échantillons de pression en relation avec les instants de mesure correspondants,
- des moyens pour additionner une valeur $\pi/2$ et une valeur $3\pi/2$ à la phase φ (modulo $2\pi$), pour obtenir deux autres phases remarquables Φmax et Φmin représentant les instants de mesure théoriques du maximum et du minimum de la courbe de valeurs de pression au cours de la rotation,
- des moyens pour rechercher dans les échantillons stockés des valeurs d'échantillons de pression Pmax et Pmin correspondant à ces instants, des moyens de calcul de la vitesse instantanée Vmax et Vmin correspondant à ces valeurs de pression Pmax et Pmin, et des moyens pour déterminer l'amplitude $V_{air}$ de la vitesse de l'hélicoptère par rapport à l'air à partir de Vmax et Vmin.

6. Système selon l'une des revendications 4 et 5, **caractérisé en ce que** la sonde de pression est une sonde fournissant des impulsions dont la périodicité est fonction de la pression, et **en ce qu'**il est prévu un circuit (CPT1) de comptage d'impulsions à fréquence beaucoup plus élevée que celle des impulsions fournies par la sonde, ce circuit comptant le nombre d'impulsions de fréquence élevée émises pendant une ou plusieurs périodes d'impulsions issues de la sonde, et le contenu du compteur représentant une valeur d'échantillon de pression.

7. Système selon la revendication 6, **caractérisé en ce que** les accumulateurs (ACC1, ACC2) sont des compteurs/décompteurs qui reçoivent les impulsions d'incrémentation du circuit de comptage d'impulsions (CPT1) et qui s'incrémentent en comptage ou en décomptage selon l'état du signal binaire qui les contrôle, les sommes S1 et S2 étant établies au bout d'un tour complet du rotor et les accumulateurs étant remis à zéro ensuite.

## Claims

1. Method for determining helicopter speed using a pressure probe (14) mounted on a blade (12) of the rotor, this method consisting in:

   - obtaining N pressure measurement samples Pi distributed over the whole of a complete rotation of the blade,
   - producing a first binary signal (F1) changing state at the passage of the blade through noteworthy orientations situated at 0° and 180° from a reference orientation of the blade, and a second binary signal (F2) in quadrature phase with respect to the first one and changing state at 90° and 270°, and producing the following sums S1 and S2 during a complete rotation:
   - S1: the sum of the samples obtained during a first state of the first binary signal reduced by the sum of the samples obtained during the second state of the first signal;
   - S2: the sum of the samples obtained during a first state of the second binary signal reduced by the sum of the samples obtained during the second state of the second binary signal,
   - calculating a digital value representing arctg (S2/S1), the result of this calculation determining a noteworthy phase φ corresponding to a direction of the sought speed.

2. Method according to Claim 1, **characterized in that**, in order to then determine the amplitude of the speed, provision is made to store the N pressure samples used during the determination of the noteworthy phase φ as well as the corresponding measurement times; a value π/2 and a value 3π/2 are added to the phase φ (modulo 2π), in order to obtain two other

noteworthy phases φmax and φmin representing the theoretical measurement times of the maximum and of the minimum of the curve of pressure values measured during the rotation, a search is carried out from among the stored samples for the pressure sample values Pmax and Pmin corresponding to these times and, finally, the instantaneous speed Vmax and Vmin is calculated from these pressure values according to a speed/pressure relationship, and the amplitude of the speed of the helicopter is determined from Vmax and Vmin.

3. Method according to Claim 2, **characterized in that** the speed/pressure relationship is as follows:

   $Pt = Ps(1+0.2M^2)^{7/2}$ where Pt is the total pressure measured by the probe, Ps is the static atmospheric pressure and M is the speed expressed as a Mach number.

4. Helicopter speed measurement system comprising a pressure probe (14) placed on a blade (12) of the rotor of the helicopter, this probe providing signals representing the pressure (Pi) measured by the probe, and means for obtaining pressure measurement samples distributed over the course of a complete rotation of the blade, **characterized in that** it furthermore comprises:

   - means (HG) for producing a first binary signal (S1) changing state at the passage of the blade through noteworthy orientations situated at 0° and 180° from a reference orientation of the blade, and a second binary signal (F2) in quadrature phase with respect to the first one and changing state at 90° and 270°,
   - a first digital accumulator (ACC1) controlled by the first binary signal for calculating the sum (S1) of the samples obtained during a first state of the first binary signal reduced by the sum of the samples obtained during the second state of the first signal;
   - a second digital accumulator (ACC2) controlled by the second binary signal for calculating the sum (S2) of the samples obtained during a first state of the second binary signal reduced by the sum of the samples obtained during the second state of the second binary signal,
   - means of calculating a digital value representing arctg(S2/S1), the result of this calculation determining a noteworthy phase φ corresponding to a direction of the sought speed.

5. System according to Claim 4, **characterized in that** it also comprises, for determining the amplitude of the speed:

   - means (MEM) for storing the pressure samples in relation to the corresponding measurement times,

- means for adding a value $\pi/2$ and a value $3\pi/2$ to the phase $\varphi$ (modulo $2\pi$), in order to obtain two other noteworthy phases $\varphi max$ and $\varphi min$ representing the theoretical measurement times of the maximum and of the minimum of the curve of pressure values during the rotation,

- means of searching for the pressure sample values Pmax and Pmin corresponding to these times from among the stored samples, means for calculating the instantaneous speed Vmax and Vmin corresponding to these pressure values Pmax and Pmin, and means for determining the amplitude $V_{air}$ of the airspeed of the helicopter from Vmax and Vmin.

6. System according to one of Claims 4 and 5, **characterized in that** the pressure probe is a probe providing pulses whose periodicity is a function of the pressure, and **in that** there is provided a circuit (CPT1) for counting pulses at a frequency very much higher than that of the pulses provided by the probe, this circuit counting the number of high-frequency pulses emitted during one or more periods of pulses coming from the probe, and the content of the counter representing a pressure sample value.

7. System according to Claim 6, **characterized in that** the accumulators (ACC1, ACC2) are reversible counters which receive the incrementing pulses from the pulse counting circuit (CPT1) and which are incremented in count-up or in count-down depending on the state of the binary signal which controls them, the sums S1 and S2 being established at the end of a complete revolution of the rotor and the accumulators then being reset to zero.

**Patentansprüche**

1. Verfahren zur Bestimmung der Geschwindigkeit eines Hubschraubers, das eine Drucksonde (14) verwendet, die auf ein Blatt (12) des Rotors montiert ist, wobei dieses Verfahren darin besteht:

- N Tastproben einer Druckmessung Pi zu erhalten, die auf die Gesamtheit einer vollständigen Drehung des Blatts verteilt sind,
- ein erstes Binärsignal (F1), das seinen Zustand beim Durchgang des Blatts durch Kennausrichtungen ändert, die sich in 0° und 180° zu einer Bezugsausrichtung des Blatts befinden, und ein zweites Binärsignal (F2) zu erzeugen, das um 90° zum ersten phasenverschoben ist und seinen Zustand bei 90° und bei 270° ändert, und die folgenden Summen S1 und S2 während einer vollständigen Drehung zu bilden:

- S1: Summe der Tastproben, die während eines ersten Zustands des ersten Binärsignals erhalten werden, verringert um die Summe der Tastproben, die während des zweiten Zustands des ersten Signals erhalten werden;
- S2: Summe der Tastproben, die während eines ersten Zustands des zweiten Binärsignals erhalten werden, verringert um die Summe der Tastproben, die während des zweiten Zustands des zweiten Binärsignals erhalten werden,

- einen Zahlenwert zu berechnen, der arctg (S2/S1) darstellt, wobei das Ergebnis dieser Berechnung eine Kennphase $\phi$ bestimmt, die einer Richtung der gesuchten Geschwindigkeit entspricht.

2. Verfahren nach Anspruch 1, **dadurch gekennzeichnet, dass**, um anschließend die Amplitude der Geschwindigkeit zu bestimmen, vorgesehen wird, die N Drucktastproben, die während der Bestimmung der Kennphase $\phi$ verwendet werden, sowie die entsprechenden Messzeitpunkte zu speichern; ein Wert $\pi/2$ und ein Wert $3\pi/2$ zur Phase $\phi$ (Modulo $2\pi$) addiert werden, um zwei weitere Kennphasen $\Phi max$ und $\Phi min$ zu erhalten, die die theoretischen Messzeitpunkte des Maximums und des Minimums der Kurve von Druckwerten darstellen, die während der Drehung gemessen werden, in den gespeicherten Tastproben die Werte von Drucktastproben Pmax und Pmin gesucht werden, die diesen Zeitpunkten entsprechen, und schließlich die Augenblicksgeschwindigkeit Vmax und Vmin ausgehend von diesen Druckwerten in Abhängigkeit von einer Geschwindigkeit/Druck-Beziehung berechnet wird, und die Amplitude der Geschwindigkeit des Hubschraubers ausgehend von Vmax und Vmin bestimmt wird.

3. Verfahren nach Anspruch 2, **dadurch gekennzeichnet, dass** die Geschwindigkeit/Druck-Beziehung folgendermaßen ist:

Pt = Ps $(1+0{,}2M^2)^{7/2}$, wobei Pt der von der Sonde gemessene Gesamtdruck, Ps der statische Atmosphärendruck, M die Geschwindigkeit ausgedrückt als Mach-Zahl ist.

4. System zur Messung der Geschwindigkeit eines Hubschraubers, das eine Drucksonde (14), die auf einem Blatt (12) des Rotors des Hubschraubers angeordnet ist, wobei diese Sonde Signale liefert, die den von der Sonde gemessenen Druck (Pi) darstellen, und Mittel aufweist, um während einer vollständigen Drehung des Blatts verteilte Druckmessungstastproben zu erhalten, **dadurch gekennzeichnet,**

**dass** es weiter aufweist:

- Mittel (HG), um ein erstes Binärsignal (S1) zu erzeugen, das seinen Zustand beim Durchgang des Blatts durch Kennausrichtungen ändert, die sich in 0° und 180° zu einer Bezugsausrichtung des Blatts befinden, und ein zweites Binärsignal (F2) zu erzeugen, das um 90° zum ersten phasenverschoben ist und seinen Zustand bei 90° und 270° ändert,
- einen ersten digitalen Akkumulator (ACC1), der vom ersten Binärsignal gesteuert wird, um die Summe S1 der während eines ersten Zustands des ersten Binärsignals erhaltenen Tastproben verringert um die Summe der während des zweiten Zustands des ersten Signals erhaltenen Tastproben zu berechnen;
- eine zweiten digitalen Akkumulator (ACC2), der vom zweiten Binärsignal gesteuert wird, um die Summe S2 der während eines ersten Zustands des zweiten Binärsignals erhaltenen Tastproben verringert um die Summe der während des zweiten Zustands des zweiten Binärsignals erhaltenen Tastproben zu berechnen,
- Mittel, um einen Zahlenwert zu berechnen, der arctg (S2/S1) darstellt, wobei das Ergebnis dieser Berechnung eine Kennphase $\phi$ bestimmt, die einer Richtung der gesuchten Geschwindigkeit entspricht.

5. System nach Anspruch 4, **dadurch gekennzeichnet, dass** es ebenfalls zur Bestimmung der Amplitude der Geschwindigkeit aufweist:

- Mittel (MEM), um die Drucktastproben in Verbindung mit den entsprechenden Messzeitpunkten zu speichern,
- Mittel, um einen Wert $\pi/2$ und einen Wert $3\pi/2$ zur Phase $\phi$ (Modulo $2\pi$) zu addieren, um zwei weitere Kennphasen $\Phi max$ und $\Phi min$ zu erhalten, die die theoretischen Messzeitpunkte des Maximums und des Minimums der Kurve von Druckwerten während der Drehung darstellen,
- Mittel, um in den gespeicherten Tastproben die Werte von Drucktastproben Pmax und Pmin zu suchen, die diesen Zeitpunkten entsprechen, Mittel zur Berechnung der Augenblicksgeschwindigkeit Vmax und Vmin entsprechend diesen Druckwerten Pmax und Pmin und Mittel zur Bestimmung der Amplitude $V_{Luft}$ der Geschwindigkeit des Hubschraubers bezüglich der Luft ausgehend von Vmax und Vmin.

6. System nach einem der Ansprüche 4 und 5, **dadurch gekennzeichnet, dass** die Drucksonde eine Sonde ist, die Impulse liefert, deren Periodizität vom Druck abhängt, und dass eine Schaltung (CPT1) zum Zählen von Impulsen mit einer sehr viel höheren Frequenz vorgesehen ist als diejenige der von der Sonde gelieferten Impulse, wobei diese Schaltung die Anzahl von Impulsen hoher Frequenz zählt, die während einer oder mehrerer von der Sonde stammenden Impulsperioden ausgesendet werden, und der Inhalt des Zählers einen Drucktastprobenwert darstellt.

7. System nach Anspruch 6, **dadurch gekennzeichnet, dass** die Akkumulatoren (ACC1, ACC2) Vorwärts/Rückwärtszähler sind, die die Impulse der Inkrementierung der Impulszählschaltung (CPT1) empfangen und die in Vorwärtszählrichtung oder Rückwärtszählrichtung je nach dem Zustand des sie steuernden Binärsignals inkrementiert werden, wobei die Summen S1 und S2 am Ende einer vollständigen Umdrehung des Rotors erstellt werden und die Akkumulatoren anschließend auf Null zurückgesetzt werden.

FIG.1

FIG.2

FIG.3

FIG.4

FIG.5

FIG.6